# EUROPÄISCHE PATENTSCHRIFT

(11) **EP 3 194 210 B1**
(45) Veröffentlichungstag und Bekanntmachung des Hinweises auf die Patenterteilung: **03.04.2019**
(21) Anmeldenummer: 15756544.1
(22) Anmeldetag: 04.08.2015
(51) Int. Cl.: B60Q 1/00, G02B 6/00, F21S 41/24, F21S 41/29, F21S 43/27, F21S 43/237, F21S 43/241, F21S 43/245, F21S 43/247, F21S 43/251, F21V 8/00, B60Q 1/04

(54) **BELEUCHTUNGSVORRICHTUNG MIT DARIN VERRIEGELBARER LICHTLEITERANORDNUNG**
LIGHTING DEVICE WITH LIGHTGUIDE ASSEMBLY WHICH CAN BE LOCKED THEREIN
DISPOSITIF D'ÉCLAIRAGE DANS LEQUEL PEUT ÊTRE VERROUILLÉ UN ENSEMBLE GUIDE DE LUMIÈRE

(30) Priorität: 16.09.2014 AT 506502014
(43) Veröffentlichungstag der Anmeldung: 26.07.2017
(73) Patentinhaber: ZKW Group GmbH, 3250 Wieselburg (AT)
(72) Erfinder: EDLETZBERGER, Thomas, 3382 Loosdorf (AT); WINDGRUBER, Patrick, 3292 Gaming (AT); ETLINGER, Stefan, 3261 Steinakirchen am Forst (AT)
(74) Vertreter: Patentanwaltskanzlei Matschnig & Forsthuber OG
(86) Internationale Anmeldenummer: PCT/AT2015/050189
(87) Internationale Veröffentlichungsnummer: WO 2016/040971

(56) Entgegenhaltungen:
- EP-A1- 2 479 487
- CN-U- 201 575 384
- CN-U- 202 691 847
- CN-U- 203 771 297
- DE-A1-102009 004 296
- DE-U1-202006 003 392
- FR-A1- 2 965 040
- JP-A- 2005 019 154

## Beschreibung

Die Erfindung betrifft eine Beleuchtungsvorrichtung für ein Fahrzeug, insbesondere für ein Kraftfahrzeug, die zumindest eine Lichtquelle und zumindest eine der zumindest einen Lichtquelle zugeordnete Lichtleiteranordnung zum Führen des von der zumindest einen Lichtquelle abgestrahlten und in die Lichtleiteranordnung eingekoppelten Lichts umfasst, wobei die Lichtleiteranordnung in einem Trägerrahmen der Beleuchtungsvorrichtung montierbar ist und umfasst:
- einen Kopfabschnitt (insbesondere einen sogenannten Leuchtring) mit einem oder (bevorzugt) mehreren Auskopplungselementen zur Auskoppelung zumindest eines Teils des eingekoppelten Lichtes, sowie
- einen Zuleitungsabschnitt der einen Einkopplungsbereich umfasst, der für das Einkoppeln von Licht aus einer Lichtquelle entlang einer Einkopplungsrichtung eingerichtet ist, und durch den so eingekoppeltes Licht dem Kopfabschnitt zugeleitet werden kann,
wobei der Einkopplungsbereich eine erste Befestigungseinrichtung aufweist, die zumindest ein quer zu einer Längsachse des Einkopplungsbereichs vorspringendes Verriegelungselement umfasst, wobei der Einkopplungsbereich in eine erste Befestigungsstelle des Trägerrahmens einsetzbar und darin mittels der ersten Befestigungseinrichtung verriegelbar ist, und
der Kopfabschnitt eine zweite Befestigungseinrichtung zum Befestigen des Kopfabschnitts an einer zweiten Befestigungsstelle des Trägerrahmens aufweist.

Eine Beleuchtungsvorrichtung dieser Art ist beispielsweise ein Scheinwerfer, wie jener eines Kraftfahrzeugs. Beleuchtungsvorrichtungen dieser Art sind beispielsweise aus DE 100 40 302 B4 bekannt, welche einen Scheinwerfer beschreibt, in dem Licht aus einer Lichtquelle über einen Lichtleiter geführt, der einen Leuchtring-ähnlichen Endabschnitt aufweist, und von letzterem zu Beleuchtungszwecken abgestrahlt wird; der Lichtleiter wird durch Hülsen in einer Halterung gehalten. Nachteilig ist die Verwendung von eigenen Bauteilen wie den Hülsen. Die Befestigung des Lichtleiters erfolgt bei herkömmlichen Anordnungen durch Verschraubungen oder Klemmung unter Verwendung zusätzlicher Bauteile. Die führt zu einem beträchtlichen Aufwand bei der Befestigung des Lichtleiters und Zentrierung in der Gewünschten Position. Außerdem sind hierbei zusätzliche Abdeckteile notwendig, um die erforderliche Abschottung des Lichtleiters, die diesen nach außen verbirgt, zu erreichen.

Eine gattungsgemäße Beleuchtungsvorrichtung für ein Fahrzeug ist aus DE 10 2009 004 296 A1 bekannt.

Es ist daher Aufgabe der Erfindung, eine vereinfachte Befestigung einer Lichtleiteranordnung in einer Beleuchtungsvorrichtung, wie insbesondere einem Kraftfahrzugscheinwerfer, zu schaffen, die ein Festlegen der Position des Lichtleiters sowohl hinsichtlich der Einkopplungsstelle des Lichts als auch der Auskopplungselemente zum Abstrahlen mit einfachen Mitteln und dennoch auf zuverlässige Weise ermöglicht.

Diese Aufgabe wird durch eine Lichtleiteranordnung bzw. eine Beleuchtungsvorrichtung der eingangs genannten Art gelöst, bei welcher erfindungsgemäß die Lichtleiteranordnung in einem Zustand, in dem der Einkopplungsbereich in der ersten Befestigungsstelle eingesetzt ist, jedoch der Kopfabschnitt an der zweiten Befestigungsstelle noch nicht festgestellt ist, in der ersten Befestigungsstelle um die Längsachse verschwenkbar ist.

Durch diese Lösung ergibt sich ein zuverlässiges Verriegelungs- und Zentriersystem für die Lichtleiteranordnung an dem Trägerrahmen der Beleuchtungsvorrichtung (d.h. im Scheinwerfer), das eine genaue Positionierung in Bezug auf den Trägerrahmen und somit der Lichtquelle sicherstellt. Gleichzeitig führt das Einsetzen des Einkopplungsbereichs in die erste Befestigungsstelle im Trägerrahmen zu einer Abschottung der Lichteinspeisung nach außen. Zudem wird eine einfachere und schnellere Montage der Lichtleiterbauteile erreicht, sowie eine Einsparung von zusätzlichen Befestigungskomponenten wie Schrauben und/oder Schellen. Vorzugsweise erfolgt daher das Festlegen des Einkopplungsbereichs in der ersten Befestigungsstelle ohne die Verwendung zusätzlicher Komponenten.

Eine Verringerung der Zahl der Komponenten und daraus resultierende Vereinfachung der Montage kann auch dadurch erreicht werden, dass das (die) Verriegelungselement(e) einstückig mit dem Einkopplungsbereich ausgebildet ist (sind).

In einer vorteilhaften Ausführungsform kann das Verriegelungselement derart gestaltet sein, dass es durch eine an dem Einkopplungsbereich vorspringende Nase realisiert ist, die an einem einer Lichteinkopplungsfläche des Einkopplungsbereichs abgewandten Seite eine Anschlagsfläche bildet. Diese Anschlagsfläche kann insbesondere mit einer korrespondierenden Fläche der Befestigungsstelle zusammenwirken, um im eingesetzten Zustand eine Bewegung aus der Befestigungsstelle hinaus in einer Richtung zu vereiteln.

Der Einkopplungsbereich kann in einer vorteilhaften Ausgestaltung zwei Verriegelungselemente aufweisen, die bevorzugt entlang der Längsachse versetzt sind. Die beiden Verriegelungselemente können bevorzugt in verschiedenen Winkelpositionen angeordnet sein. Die beiden Verriegelungselemente weisen Anschlagsflächen auf, die bevorzugt einander zugewandt sind. Die Anschlagsflächen korrespondieren mit Gegenflächen am Gehäuse, die in bevorzugter Ausführung als Ober- und Unterseite einer gemeinsamen Gehäuserippe (Leiste) ausgebildet sind; in einer Variante könnte je eine Gegenfläche auch auf verschiedenen Leisten liegen. Die Anordnung der Verriegelungselemente in verschiedenen Winkelpositionen hat den Vorteil, dass nach Einsetzen des ersten Verriegelungselements das zweite an der oberen Gegenfläche der Gehäuseleiste anschlägt und so die Drehebene der Verriegelungsbewegung mechanisch festlegt.

Alternativ können die Anschlagsflächen voneinander abgewandt sein. Sie können sich in dieser Ausführung an verschiedenen oder demselben Verriegelungselement befinden. Die zugehörigen Gegenflächen befinden sich in diesem Fall bevorzugt an unterschiedlichen Gehäuserippen (oder Leisten). Beide Ausführungen verhindern ein Bewegen aus der Befestigungsstelle sowohl in Einsetzrichtung als auch in der Gegenrichtung.

Eine vereinfachte Montage der Lichtleiteranordnung wird unter anderem auch durch eine Ausführung erleichtert, bei welcher der Einkopplungsbereich als im Wesentlichen kreiszylinderförmiges Ende eines Lichtleiters ausgebildet ist, an dem die Lichteinkopplung durch die Stirnfläche des kreiszylinderförmigen Endes als Lichteinkopplungsfläche erfolgt.

Dies gestattet die Montage eines kreisrunden Lichtleiters durch Einsetzen und Verschwenken um die Einsetzrichtung und ermöglicht eine formschlüssige Verbindung von Lichtleiter und Gehäuse. Weil das Gehäuse aus optisch intransparentem Material gefertigt ist, somit insbesondere die Befestigungsstelle lichtundurchlässig ist, werden Elemente des Scheinwerfers wie Reflektoren oder verspiegelte Blenden vom Einkoppelbereich gegen Streulicht abgeschottet. Das betrifft insbesondere Licht, das aufgrund des größeren Austrittswinkels aus der Lichtquelle außerhalb des Totalreflexionswinkels des Lichtleiters in die Einkoppelfläche eintritt und nicht im Lichtleiter weitergeleitet wird.

In einer ebenfalls zweckmäßigen Ausgestaltung kann die zweite Befestigungseinrichtung zumindest ein Verrastungselement, nämlich eine Rastklinke oder einen Rastanschlag, umfassen, das mit einem zugeordneten Gegenelement der zweiten Befestigungsstelle, nämlich einem Rastanschlag oder einer Rastklinke, verrastend zusammenwirkt.

Die Erfindung samt weiteren Vorzügen und Weiterbildungen wird im Folgenden anhand eines nicht einschränkenden Ausführungsbeispiels näher erläutert, das in den beigefügten Zeichnungen dargestellt ist. Die Zeichnungen zeigen
- Fig. 1: einen Lichtleiter gemäß dem Ausführungsbeispiel der Erfindung in einer Schrägansicht;
- Fig. 2: den Einkopplungsbereich des Lichtleiters der Fig. 1 in einer Seitenansicht;
- Fig. 3: den Einkopplungsbereich in einer anderen Seitenansicht;
- Fig. 4: den Einkopplungsbereich im montierten Zustand des Lichtleiters in einem Trägerrahmen eines Scheinwerfers;
- Fig. 5: eine Unteransicht der Befestigungsstelle des Lichtleiters im Trägerrahmen;
- Fig. 6: eine Seitenansicht der Befestigungsstelle des Lichtleiters im Trägerrahmen;
- Fig. 7: den Lichtleiter der Fig. 1 im montierten Zustand, worin dieser zusammen mit einem zweiten Lichtleiter in dem Trägerrahmen eingesetzt ist;
- Fig. 8: eine Detailansicht der Befestigungseinrichtung des Leuchtrings im montierten Zustand in der korrespondierenden Befestigungsstelle;
- Fig. 9: illustriert das Einsetzen des Einkopplungsbereichs des Lichtleiters in die zugehörende Befestigungsstelle;
- Fig. 10: illustriert die anschließende Bewegung des Lichtleiters in seine Montageposition;
- Fig. 11: zeigt die Positionierung der Einkopplungsbereiche beider Lichtleiter in der Montageposition;
- Fig. 12: zeigt eine Befestigungsstelle gemäß einem anderen Beispiel, das nicht Teil der Erfindung ist, worin der Lichtleiter durch Einschieben in eine schlitzartige Ausnehmung als Kulissenführung eingesetzt werden kann, in einer perspektivischen Ansicht;
- Fig. 13: zeigt eine Variante mit einer gewinkelten Kulissenführung; und
- Fig. 14: zeigt den Einkopplungsbereich einer Zuleitung eines Lichtleiters der in eine Befestigungsstelle der Fig. 12 oder 13 eingesetzt werden kann.

Das im Folgenden beschriebene Ausführungsbeispiel der Erfindung zeigt die verriegelbare Anordnung zweier Lichtleiter in einem Scheinwerfer für ein Kraftfahrzeug (wie z.B. ein PKW). Es sei festgehalten, dass die Erfindung nicht auf das Ausführungsbeispiel eingeschränkt ist, und zudem an dem Ausführungsbeispiel Varianten, Abänderungen und Hinzufügungen möglich sind, die für den Fachmann naheliegend sind und unter den Schutzbereich gemäß den Ansprüchen fallen.

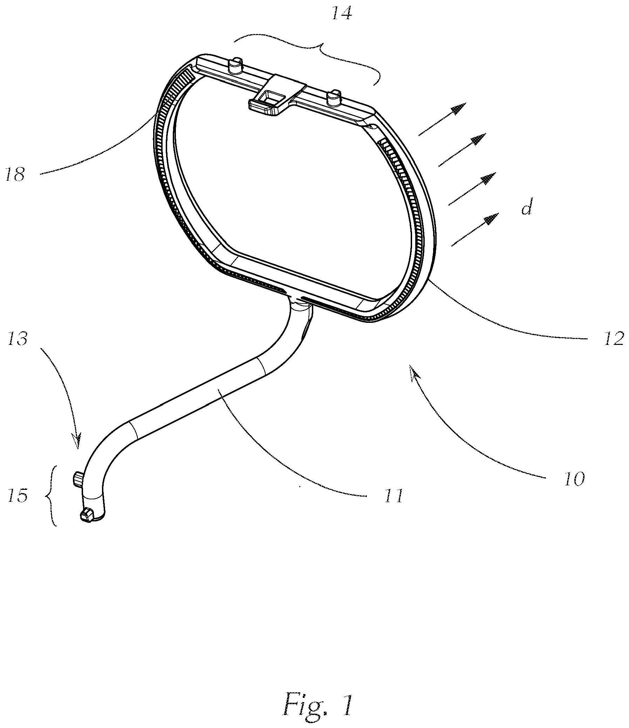

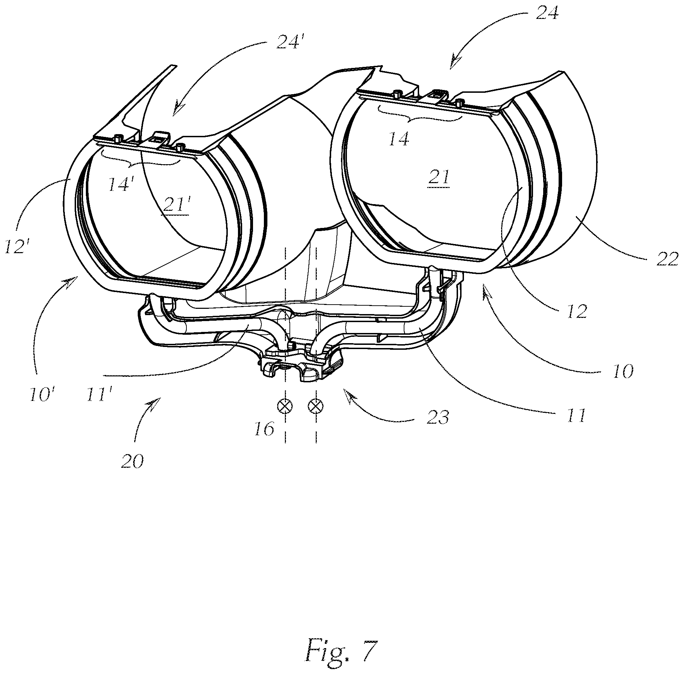

Fig. 1 zeigt eine Lichtleiteranordnung 10 des Ausführungsbeispiels in einer perspektivischen Ansicht. Die Lichtleiteranordnung 10 wird im Folgenden einfach Lichtleiter genannt. Der Lichtleiter 10, der nach bekannter Art aus einem geeigneten Lichtleitermaterial besteht und im Wesentlichen starr ist, ist in einen Zuleitungsabschnitt 11 und einen Kopfabschnitt 12 gegliedert. Der Zuleitungsabschnitt 11, kurz auch "Zuleitung", ist vorzugsweise länglich geformt, bevorzugt mit in Längsrichtung im Wesentlichen gleichbleibendem Querschnitt; d.h. die Zuleitung weist eine stabförmige Gestalt auf, die im Allgemeinen gerade und gekrümmte Abschnitte aufweisen kann, wie im gezeigten Beispiel einen Einkopplungsbereich 15 in Form eines kurzen geraden Abschnitts, auf den zwei gebogene Knieabschnitte folgen, zwischen denen wiederum ein gerader Abschnitt liegt. Beispielsweise ist der Querschnitt der Zuleitung - von angefügten Bauteilen wie die noch zu besprechenden Nasen abgesehen - gerundet, vorzugsweise kreisrund. Der Kopfabschnitt 12 ist beispielsweise ein Leuchtring, der im montierten Zustand (Fig. 7) um den Rand einer fensterartigen Scheinwerferöffnung verläuft, und weist entlang seines Verlaufs ein oder bevorzugt mehrere Auskopplungselemente 18 auf, durch die das in den Lichtleiter eingekoppelte Licht nach vorne austreten kann (die Abstrahlrichtung d ist in Fig. 1 durch Pfeile angedeutet). Die Formgebung des Leuchtrings 12 hinsichtlich der Auskopplungselemente 18 ist nicht Gegenstand der Erfindung und wird daher hier nicht näher ausgeführt, stattdessen sei hierzu auf den Stand der Technik verwiesen. Gemäß der Erfindung beinhalten sowohl die Zuleitung 11 als auch der Kopfabschnitt (Leuchtring) 12 jeweils Befestigungseinrichtungen 13, 14, mittels derer der Lichtleiter 10 in einem Scheinwerfer 20 (Fig. 7) befestigt und dort in einer gewünschten Montageposition verriegelt werden kann.

Wie in Fig. 7 erkennbar ist, stellt die Lichtleiteranordnung 10 des gezeigten Ausführungsbeispiels eine Komponente eines Doppelscheinwerfers 20 dar, der zwei Öffnungen 21, 21' aufweist, die verschiedene oder gleichartige Funktionen haben können; beispielsweise ist die eine Öffnung 21 für Abblendlicht, die andere Öffnung 21' für Fernlicht vorgesehen. Für jedes Lichtfenster ist eine eigene Lichtleiteranordnung 10, 10' mit jeweils spezifisch gestaltetem Leuchtring 12, 12' vorgesehen. Die zweite Lichtleiteranordnung 10' hat somit vorzugsweise eine der ersten Lichtleiteranordnung 10 entsprechende, jedoch der zweiten Öffnung 21' angepasste Formgebung. Die Lichtleiter 10, 10' sowie weitere, nicht gezeigte Komponenten des Scheinwerfers sind in einem Gehäuse oder Trägerrahmen 22 des Scheinwerfers montiert. Der Trägerrahmen 22 wird wegen seiner Aufgabe, die Sichtbarkeit innenliegender Teile des Scheinwerfers nach außen zu verhindern, auch als "Blende" bezeichnet. Fig. 7 ist eine perspektivische Darstellung des Trägerrahmens von vorne, d.h. die Lichtabstrahlung erfolgt im Wesentlichen zum Betrachter hin. Vorzugsweise werden beide Lichtleiter 10, 10' in demselben Arbeitsgang gemäß der Erfindung in den Trägerrahmen 22 des Scheinwerfers eingesetzt. In Fig. 7 und vergleichbaren Figuren ist (neben den Lichtleitern und zu diesen gehörenden Komponenten) von dem Scheinwerfer der Deutlichkeit halber lediglich der Trägerrahmen 22 gezeigt, wobei auch die Abdeckungen der Zuleitungen 11, 11' der Lichtleiter entfernt sind, um diese für die Zwecke der Offenbarung erkennbar zu lassen. Außerdem sind in Fig. 7 die den Lichtleitern 10, 10' zugeordneten Lichtquellen 16 nur symbolisch dargestellt. Bei der Lichtquelle kann es sich beispielsweise um eine LED-Lichtquelle handeln.

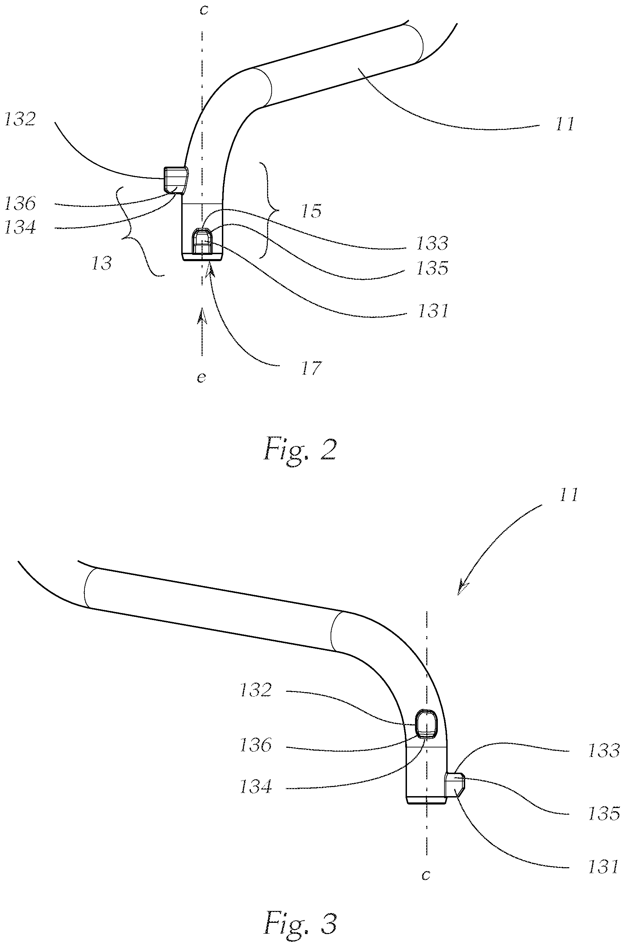

Bezugnehmend auf Fig. 2 und 3 weist die Zuleitung 11 an ihrem vom Kopfabschnitt 12 entfernten Ende den bereits erwähnten Einkopplungsbereich 15 zum Einkoppeln von Licht aus einer Lichtquelle 16 (Fig. 7) entlang einer Einkopplungsrichtung e durch eine hierfür vorgesehene Einkoppelfläche 17 auf. Beispielsweise ist der Einkopplungsbereich als Endabschnitt der Zuleitung 11 ausgebildet und hat einen zylinderförmigen Körper mit kreisförmigen Querschnitt und Längsachse c, wobei die Einkoppelfläche 17 durch die Stirnfläche des zylinderförmigen Körpers gebildet ist. In der Regel ist die Einkopplungsrichtung e parallel zur Längsachse c.

Der Einkopplungsbereich 15 umfasst gemäß der Erfindung außerdem ein oder mehrere Elemente, die eine erste Befestigungseinrichtung 13 verwirklichen, mittels derer der Einkopplungsbereich 15 in einer korrespondierenden Befestigungsstelle 23 (Fig. 7) im Trägerrahmen 22 feststellbar ist. Im gezeigten Beispiel ist die Befestigungseinrichtung 13 aus zwei Zapfen oder Nasen 131, 132 gebildet; natürlich kann sie in anderen Ausführungen anders gestaltet sein, beispielsweise mit nur einem Zapfen. Die Nasen 131, 132 sind zueinander versetzt angeordnet, und zwar vorzugsweise auf verschiedenen Höhen entlang der Längsachse c des Einkopplungsbereichs 15 und/oder in verschiedenen Winkelpositionen um die Achse c.

Die Verriegelungselemente, die hier z.B. als Nasen ausgebildet sind, sind quer zu einer Längsachse des Lichtleiters (hier Längsachse c) vorspringende Körper, von deren Begrenzungsflächen zumindest eine als - vorzugsweise als ebenes Flächenstück gestaltete -Kontaktfläche 133, 134 wie nachstehend beschrieben benutzt wird. Lichtleiter und angeformte Elemente werden im Spritzguss hergestellt. Für eine erleichterte Montage müssen Grate und scharfe Kanten vermieden werden. Dazu gehen die Begrenzungsflächen über Ansatzschrägen 135, 136 in den zylinderförmigen Körper des Einkopplungsbereichs über.

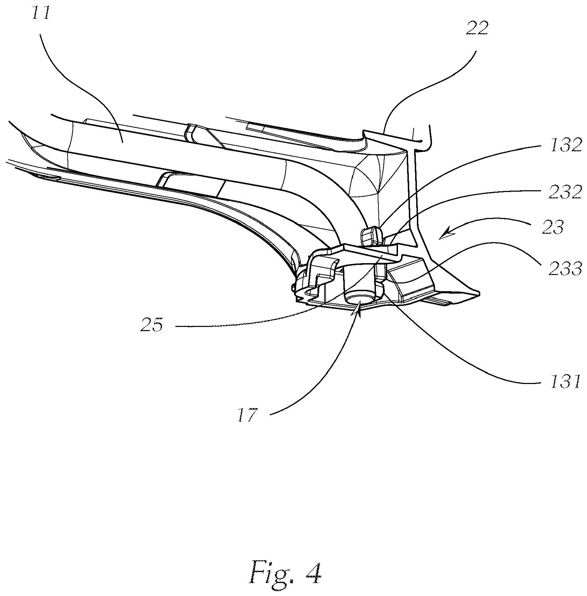

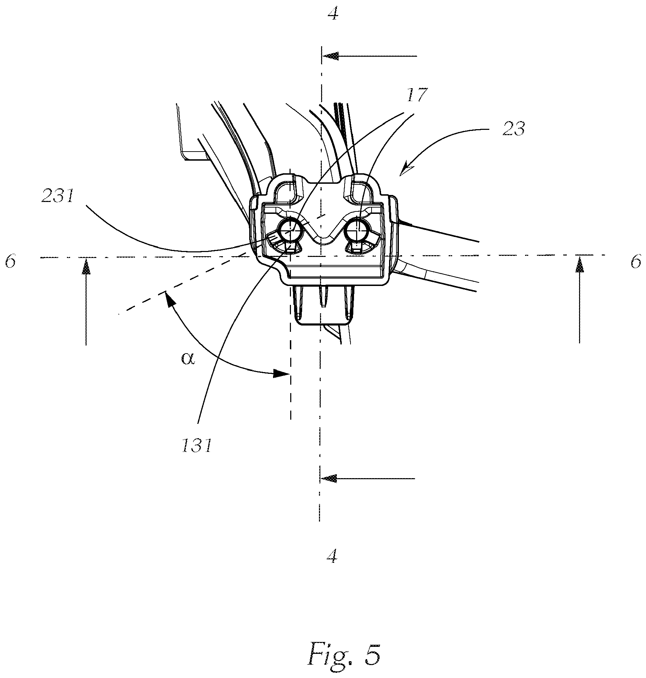

Fig. 4 zeigt den Bereich des Trägerrahmens 22, in dem sich die Befestigungsstelle 23 befindet, in einer Schnittansicht entsprechend einem Schnitt entlang der Linie 4-4 in Fig. 5; da die Schnittfläche zwischen den beiden Einkopplungsbereichen der eingesetzten Lichtleiter verläuft, ist in Fig. 4 nur einer der beiden Lichtleiter (genauer dessen Zuleitung 11) sichtbar. Der Lichtleiter ist im montierten Zustand dargestellt (Endstellung). Die untere Nase 131 liegt an einer Anschlagfläche 233 der Befestigungsstelle 23 an; genauer gesagt weist die Nase 131 an der Seite, die der Lichteinkopplungsfläche 17 abgewandt ist, eine obere Fläche 133 (siehe Fig. 2 und 3) auf, die mit der Anschlagfläche 233 in Kontakt kommt. Die Nase 131 verhindert so eine unerwünschte Bewegung des Einkopplungsbereichs aus der Befestigungsstelle 23 hinaus (d.h. in Fig. 4 nach oben), die das Einkoppeln des Lichtes in den Lichtleiter verschlechtern oder ganz vereiteln könnte. Die obere Nase 132 dagegen weist eine untere Fläche 134 auf, die einen Anschlag in die andere Richtung darstellt, um ein übermäßiges Verschieben/Andrücken der Lichteinkopplungsfläche 17 zur Lichtquelle hin zu verhindern. Die Fläche 134 liegt hierzu auf einer Gegenfläche 232 der Befestigungsstelle 23 an, die beispielsweise von der Oberseite der Rahmenleiste 25 gebildet wird, durch die der Einkopplungsbereich gesteckt wird.

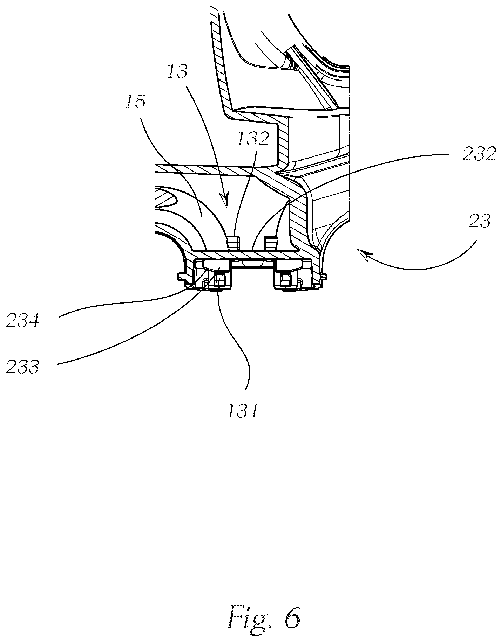

Fig. 5 zeigt die Befestigungsstelle 23 in einer Unteransicht, worin die Enden beider eingesetzten Lichtleiter und somit die Lichteinkopplungsflächen 17 sichtbar sind. Fig. 6 zeigt die Befestigungsstelle 23 in einer seitlichen Schnittansicht entsprechend der Schnittlinie 6-6 der Fig. 5. Am Beispiel der ersten Befestigungseinrichtung 13 des ersten Lichtleiters 10 ist die untere Nase 131 erkennbar sowie eine Ausnehmung 231, die um einen vorbestimmten Winkel α gegenüber der Endposition der Nase 131 angeordnet ist. Die Ausnehmung 231 dient dazu, ein Einsetzen des Einkopplungsbereiches 15 zu ermöglichen, wobei dieser während des Einsetzens der Lichtleiter um den Winkel α um die Längsachse c gedreht ist. In Fig. 6 ist auch die Gestaltung der Anschlagfläche 233 erkennbar; diese ist, um das Einpassen der Nase 131 bei der finalen Drehbewegung auf die Anschlagfläche 233 zu erleichtern, mit einer Auflaufschrägung 234 versehen.

Wieder bezugnehmend auf Fig. 1 und 7 ist an dem Kopfabschnitt 12 des Lichtleiters 10 eine zweite Befestigungseinrichtung 14 vorgesehen, die mit einer Befestigungsstelle 24 des Trägerrahmens zusammenwirkt, die am Rand der zugeordneten Öffnung 21 vorgesehen ist. Die dadurch erzielte Befestigung dient vorteilhafterweise dem positionsrichtigen Anbringen des Leuchtrings 12 auf der Umrandung der Öffnung 21.

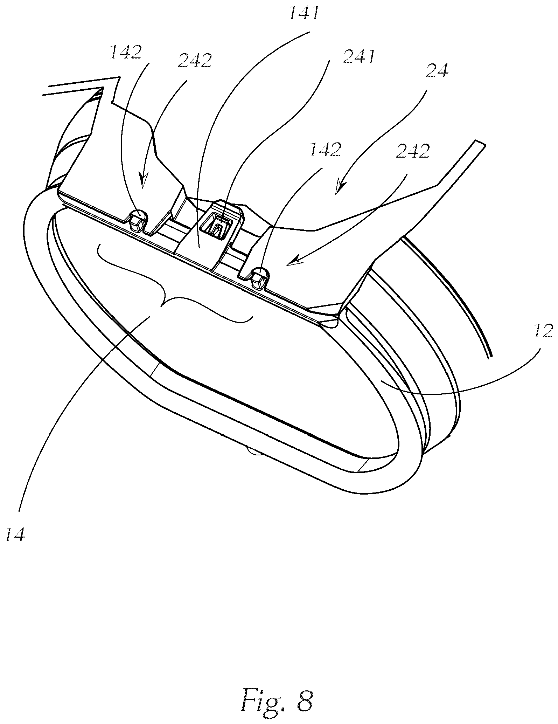

Fig. 8 zeigt die zweite Befestigungseinrichtung 14 im eingesetzten Zustand in der zugeordneten Befestigungsstelle 24 in einer Schrägansicht von oben. Die Befestigungseinrichtung 14 umfasst ein Verrastungselement 141, hier einen Rastanschlag beispielsweise in Form eines Rahmens, das mit einem korrespondierenden Gegenelement 241 zusammen wirkt, das hier als eine federnde Klinke 241 ausgebildet ist, die an einer z.B. nach oben orientierten Fläche der Befestigungsstelle 24 ausgebildet ist. Selbstverständlich können in einer Variante die beiden Elemente, die für ein Einrasten sorgen, auch anders ausgebildet sein; insbesondere könnten die Klinke und der Rastanschlag für die Klinke gegeneinander ausgetauscht sein. Außerdem können günstiger Weise Einrichtungen zum Zentrieren des Leuchtrings 12 vorgesehen sein. Beispielsweise sind in der Befestigungsstelle 14 beiderseits der Klinke 241 zwei keilartige Vertiefungen 242 vorgesehen, in die korrespondierende Zentrierzapfen 142 des Leuchtrings 12 zu liegen kommen und eine Zentrierung des Leuchtrings 12 in der gewünschten Position auf dem Trägerrahmen 22 um die Öffnung 21 bewirken. Auch hier können in einer Variante die Zentriereinrichtungen anders gestaltet sein; z.B. könnten die Zentriervertiefungen am Leuchtring ausgebildet sein und mit Zentrierzapfen auf der Befestigungsstelle zusammenwirken.

Der zweite Lichtleiter 10' kann in entsprechender Weise durch eine eigene Befestigungseinrichtung 14' an einer Befestigungsstelle 24' des Trägerrahmens 22 befestigt werden.

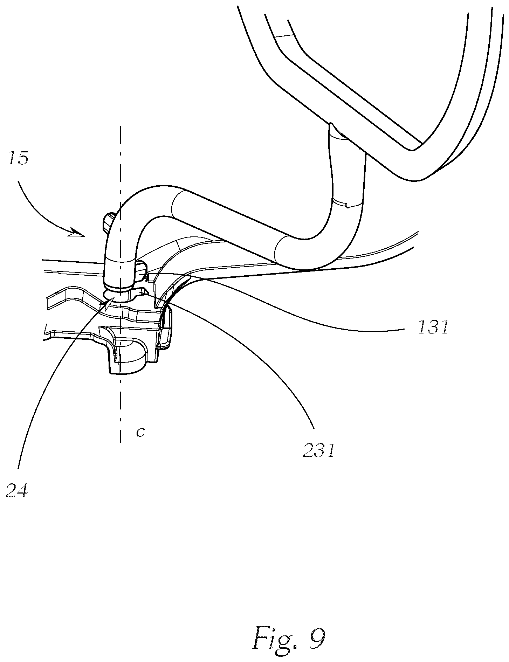

Fig. 9 bis 11 illustrieren den Montagevorgang einer Lichtleiteranordnung 10 gemäß der Erfindung.

Wie in Fig. 9 illustriert wird der Lichtleiter 10 in einer gegenüber seiner Endstellung um einen Winkel α gedrehten Stellung ("Einsetzstellung") in einer Bewegung entlang der Längsachse c, die bevorzugt mit der Lichteinkopplungsrichtung e zusammenfällt, in die Befestigungsstelle 24 eingesetzt. Hierbei wird das Ende des Lichtleiters, das den Einkopplungsbereich 15 bildet, in die Öffnung in der Befestigungsstelle 24 eingeführt, sodass die Nase 131 durch die Ausnehmung 231 der Befestigungsstelle 24 geführt werden kann, bis die zweite Nase 132 als Anschlag auf die Gegenfläche 232 anstößt. Der Lichtleiter 10 ist in dem so erreichten Zustand (d.h. der Einkopplungsbereich 15 ist in der ersten Befestigungsstelle 23 eingesetzt) in der ersten Befestigungsstelle 23 um die Längsachse c des Einkopplungsbereichs bewegbar, genauer gesagt verschwenkbar.

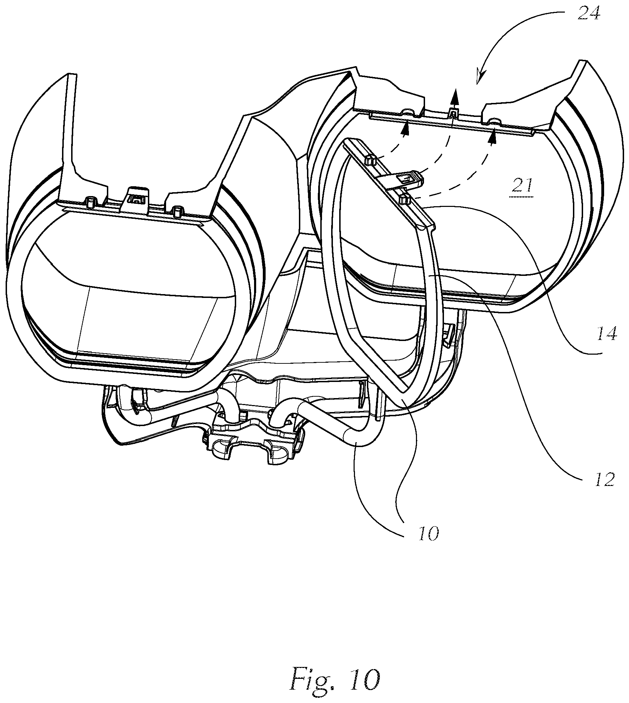

Sodann wird, wie in Fig. 10 dargestellt, durch eine Schwenkbewegung der Kopfabschnitt 12 zu der Öffnung 21 bewegt, sodass die zweite Befestigungseinrichtung 14 in der zweiten Befestigungsstelle 24 zu liegen kommt und dort einrastet. Auf diese Weise wird der Lichtleiter 10 in seiner Endstellung festgestellt. Das Herstellen der Rastverbindung der Befestigungseinrichtung 14 an der Befestigungsstellt 24 erfolgt wie oben anhand der Fig. 8 erläutert bevorzugt durch Einrasten der Klinke 241 in den Rastanschlag 141.

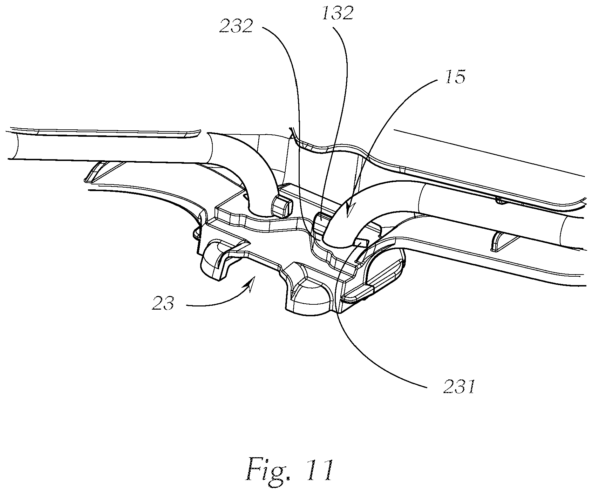

Fig. 11 zeigt für die so erreichte Endstellung eine Detailansicht der ersten Befestigungsstelle 23 mit darin eingesetztem Einkopplungsbereich 15. Die Leiste, die die Gegenfläche 232 für die obere Nase 132 bildet, befindet sich in Klemmung zwischen der oberen Nase 132 und der unteren Nase 131 (Fig. 6). Ein Herausziehen des Einkopplungsbereichs 15 ist nicht möglich, da die untere Nase 131 gegenüber der Ausnehmung 231 um den Winkel α verstellt ist. Auf diese Weise ergibt sich nach dem Prinzip eines Bajonettverschlusses eine sichere Verriegelung des gesamten Lichtleiters in der als Endstellung gewünschten Position.

Durch die Kombination zweier Befestigungsvorrichtungen, einerseits im Bereich der Lichteinkopplung an der Zuleitung 11 und andererseits an einer geeigneten Stelle am Leuchtring 12, bietet die Erfindung eine verbesserte Stabilität der Montage der Lichtleiteranordnung 10 an dem Trägerrahmen 22 des Scheinwerfers. Durch die Befestigungseinrichtung 13 an dem Einkopplungsbereich 15 ergibt sich eine sichere Positionierung, beispielsweise infolge einer Klemmung durch die beiden Nasen 131,132, sowie eine Verbindung, die zudem gegen Vibrationen unempfindlich ist. Durch die Verrastung ergibt sich eine genaue Positionierung des Leuchtringes 12 auf dem Trägerrahmen 22, ohne dass dabei eine Beeinträchtigung der optimalen Positionierung der Lichteinkopplung im Einkopplungsbereich 15 in Kauf genommen werden müsste.

Selbstverständlich ist die Erfindung nicht auf die gezeigten Ausführungsbeispiele eingeschränkt. Vielmehr können vielfältige Abwandlungen und Hinzufügungen vorgenommen werden, ohne den Schutzbereich gemäß den beigefügten Ansprüchen zu verlassen. Beispielsweise kann der Einkopplungsbereich lediglich ein Verriegelungselement enthalten, das einander gegenüber liegende Anschlagsflächen aufweist, während in der ersten Befestigungsstelle zwei Gegenflächen vorgesehen sind, die auf je einer Leiste des Trägerrahmens ausgebildet sind (diese beiden Leisten bilden somit ein Fach, in das das Verriegelungselement eingreift) und mit den Anschlagsflächen der Verriegelungselemente zusammenwirken.

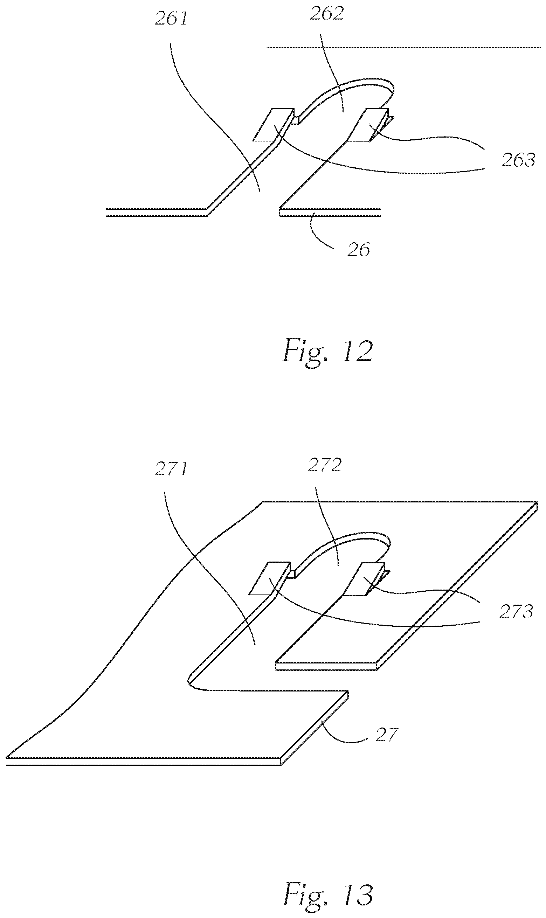

Eine andere Variante, die nicht Teil der Erfindung ist, sieht vor, dass die die Lichtleiteranordnung in der ersten Befestigungsstelle eingesetzt und dort quer zur Längsachse verschoben (verrückt) wird, anstelle einer schwenkenden Bewegung. Dies ist an dem in Fig. 12 bis 14 gezeigten Ausführungsbeispiel illustriert.

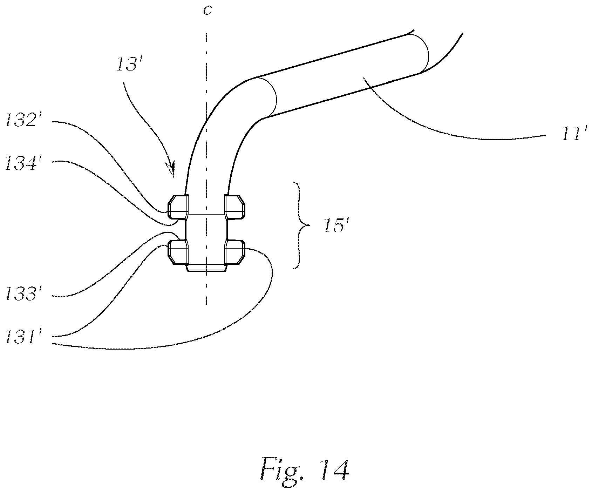

Fig. 12 zeigt eine Leiste 26, die in der ersten Befestigungsstelle als Abwandlung der Leiste 25 mit einer schlitzartigen Ausnehmung 261 ausgebildet ist. In diese geradlinige Ausnehmung 261 kann der Einkopplungsbereich 15' (Fig. 14) in einer seitlichen Bewegung, nämlich quer zur Längsachse c, eingeschoben werden. Fig. 13 zeigt eine Variante 27 der Leiste, worin die Ausnehmung 271 als gewinkelte kulissenartige Führung gestaltet ist, die ein Einschieben entlang Wegstücken in verschiedenen Richtungen bedingt. Die Ausnehmung 261, 271, genauer gesagt deren Endbereich 262, 272, verläuft bevorzugt in derselben Richtung wie jene Richtung, entlang der an der zweiten Befestigungsstelle 24 die Verbindung hergestellt wird.

Fig. 14 zeigt den Einkopplungsbereich 15' einer Zuleitung 11' eines Lichtleiters gemäß diesem Beispiel. In diesem Fall umfasst die Befestigungseinrichtung 13' beispielsweise zwei Paare von Nasen 131', 132'. Die Nasen können sich im Endbereich 262, 272 der Ausnehmung jeweils links und rechts abstützen, und zwar mithilfe von Kontaktflächen 133', 134', die einander zugewandt sind und zwischen sich die Leiste aufnehmen, genauer den Rand der Leiste an der Ausnehmung 261, 271. Um zu verhindern, dass der Einkopplungsbereich 15', wenn dieser in dem Endbereich 262, 272 eingesetzt ist, letzteren unerwünschter Weise verlässt, können am Eingang des Endbereichs federnde Elemente 263, 273 vorgesehen sein, die Anschläge gegen eine Rückbewegung bilden. Alternativ oder ergänzend kann der Endbereich den Einkopplungsbereich 15' durch Klemmenwirkung aufgrund einer entsprechend knappen Formgebung halten.

## Patentansprüche

1. Beleuchtungsvorrichtung (20) für ein Fahrzeug, insbesondere für ein Kraftfahrzeug, umfassend zumindest eine Lichtquelle und zumindest eine der zumindest einen Lichtquelle zugeordnete Lichtleiteranordnung (10) zum Führen des von der zumindest einen Lichtquelle abgestrahlten und in die Lichtleiteranordnung eingekoppelten Lichts, wobei die Lichtleiteranordnung (10) in einem Trägerrahmen (22) der Beleuchtungsvorrichtung (20) montierbar ist und
- einen Kopfabschnitt (12) mit zumindest einem Auskopplungselement (18) zur Auskoppelung zumindest eines Teils des eingekoppelten Lichtes, sowie
- einen Zuleitungsabschnitt (11), der einen Einkopplungsbereich (15) umfasst, der für das Einkoppeln von Licht aus einer Lichtquelle eingerichtet ist, und durch den so eingekoppeltes Licht dem Kopfabschnitt (12) zuleitbar ist,
umfasst, wobei
der Einkopplungsbereich (15) eine erste Befestigungseinrichtung (13) aufweist, die zumindest ein quer zu einer Längsachse (c) des Einkopplungsbereichs (15) vorspringendes Verriegelungselement (131, 132) umfasst, wobei der Einkopplungsbereich (15) in eine erste Befestigungsstelle (23) des Trägerrahmens (22) einsetzbar und darin mittels der ersten Befestigungseinrichtung verriegelbar ist, und
der Kopfabschnitt (12) eine zweite Befestigungseinrichtung (14) zum Befestigen des Kopfabschnitts (12) an einer zweiten Befestigungsstelle (24) des Trägerrahmens (22) aufweist, **dadurch gekennzeichnet, dass** die Lichtleiteranordnung (10) in einem Zustand, in dem der Einkopplungsbereich (15) in der ersten Befestigungsstelle (23) eingesetzt ist, jedoch der Kopfabschnitt (12) an der zweiten Befestigungsstelle (24) noch nicht festgestellt ist, in der ersten Befestigungsstelle (23) um die Längsachse (c) verschwenkbar ist.

2. Beleuchtungsvorrichtung (20) nach Anspruch 1, **dadurch gekennzeichnet, dass** das zumindest eine Verriegelungselement (131, 132) einstückig mit dem Einkopplungsbereich (15) ausgebildet ist.

3. Beleuchtungsvorrichtung (20) nach einem der vorhergehenden Ansprüche, **dadurch gekennzeichnet, dass** das Verriegelungselement (131) eine an dem Einkopplungsbereich (15) vorspringende Nase ist, die an einem einer Lichteinkopplungsfläche (17) des Einkopplungsbereichs (15) abgewandten Seite eine Anschlagsfläche (133) bildet.

4. Beleuchtungsvorrichtung (20) nach Anspruch 3, **dadurch gekennzeichnet, dass** die erste Befestigungseinrichtung (13) eine Ausnehmung (231) aufweist, durch welche das Verriegelungselement (131) während des Einsetzen des Einkopplungsbereiches (15) bewegbar ist, und welche um einen Winkel gegenüber der Endposition des Verriegelungselements (131) angeordnet ist.

5. Beleuchtungsvorrichtung (20) nach einem der vorhergehenden Ansprüche, **dadurch gekennzeichnet, dass** der Einkopplungsbereich (15) zwei Verriegelungselemente (131, 132) aufweist, die entlang der Längsachse (c) versetzt und bevorzugt in verschiedenen Winkelpositionen angeordnet sind.

6. Beleuchtungsvorrichtung (20) nach Anspruch 5, **dadurch gekennzeichnet, dass** jedes der beiden Verriegelungselemente (131, 132) eine Anschlagsflächen (133, 134) aufweist, wobei die Anschlagsflächen zueinander entgegengesetzt orientiert und bevorzugt einander zugewandt sind, und dass in der ersten Befestigungsstelle (23) mit den Anschlagsflächen der Verriegelungselemente zusammenwirkende Gegenflächen (232, 233) vorgesehen sind.

7. Beleuchtungsvorrichtung (20) nach Anspruch 6, **dadurch gekennzeichnet, dass** die Gegenflächen (232, 233) als oberseitige und unterseitige Flächen zumindest einer Leiste (25) des Trägerrahmens (22) ausgebildet sind.

8. Beleuchtungsvorrichtung nach einem der Ansprüche 1 bis 4, **dadurch gekennzeichnet, dass** das zumindest ein Verriegelungselement (131,132) als Verriegelungselement mit einander gegenüber liegenden Anschlagsflächen (133,134) ausgebildet ist, und dass in der ersten Befestigungsstelle (23) zwei Gegenflächen (232,233) vorgesehen sind, die auf je einer Leiste (25) des Trägerrahmens (22) ausgebildet sind und mit den Anschlagsflächen (133,134) der Verriegelungselemente (131,132) zusammenwirken.

9. Beleuchtungsvorrichtung (20) nach einem der vorhergehenden Ansprüche, **dadurch gekennzeichnet, dass** der Einkopplungsbereich (15) als im Wesentlichen kreiszylinderförmiges Ende eines Lichtleiters ausgebildet ist, an dem die Lichteinkopplung durch die Stirnfläche (17) des kreiszylinderförmigen Endes als Lichteinkopplungsfläche erfolgt.

10. Beleuchtungsvorrichtung (20) nach einem der vorhergehenden Ansprüche, **dadurch gekennzeichnet, dass** die zweite Befestigungseinrichtung (14) zumindest ein Verrastungselement (141), nämlich eine Rastklinke oder einen Rastanschlag, umfasst, das mit einem zugeordneten Gegenelement (241) der zweiten Befestigungsstelle (24), nämlich einem Rastanschlag oder einer Rastklinke, verrastend zusammenwirkt.

11. Beleuchtungsvorrichtung (20) nach Anspruch 10, **dadurch gekennzeichnet, dass** die zweite Befestigungseinrichtung (14) zusätzlich zumindest eine Zentriereinrichtung (142) umfasst, die mit korrespondierenden Vertiefungen und/oder Vorsprüngen an der zweiten Befestigungsstelle (24) zum Zentrieren des Kopfabschnitts (12) im Trägerrahmen (22) zusammenwirkt.

12. Beleuchtungsvorrichtung (20) nach einem der vorhergehenden Ansprüche, **dadurch gekennzeichnet, dass** die Befestigungsstelle (13) lichtundurchlässig ist und mit dem darin eingesetzten Einkopplungsbereich (15) der Lichtleiteranordnung (10) eine zum Inneren der Beleuchtungsvorrichtung gegen Streulicht abgeschottete Verbindung ausbildet.

13. Beleuchtungsvorrichtung (20) nach Anspruch 1, **dadurch gekennzeichnet, dass** ausgehend von dem Zustand, in dem der Einkopplungsbereich (15) in der ersten Befestigungsstelle (23) eingesetzt, jedoch der Kopfabschnitt (12) an der zweiten Befestigungsstelle (24) noch nicht festgestellt ist, der Kopfabschnitt (12) durch eine Schwenkbewegung um die Längsachse (c) der ersten Befestigungsstelle (23) in der zweiten Befestigungsstelle (24) zu liegen kommt und dort einrastbar ist.

## Claims

1. A lighting device (20) for a vehicle, in particular for a motor vehicle, comprising at least one light source and at least one light guide assembly (10) assigned to the at least one light source for guiding light which is emitted by the at least one light source and coupled into the light guide assembly, wherein the light guide assembly (10) is configured to be mounted in a support frame (22) of the lighting device (20) and comprises
- a head portion (12) having at least one decoupling element (18) for coupling out at least some of the coupled-in light, and
- a feed line portion (11), which comprises a coupling-in region (15), which is designed to couple in light originating from a light source and which is configured to direct light coupled in in this way to the head portion (12),
wherein
the coupling-in region (15) has a first securing arrangement (13), which comprises at least one locking element (131, 132) protruding transversely to a longitudinal axis (c) of the coupling-in region (15), wherein the coupling-in region (15) is insertable into a first securing location (23) of the support frame (22) and is lockable therein by means of the first securing arrangement, and
the head portion (12) has a second securing location (14) for securing the head portion (12) to a second securing location (24) of the support frame (22)
**characterised in that** the light guide assembly (10) is pivotable in the first securing location (23) about the longitudinal axis (c) in a state where the coupling-in region (15) is inserted in the first securing location (23) while the head portion (12) is not yet fixed at the second securing location (24).

2. The lighting device (20) according to claim 1, **characterised in that** the at least one locking element (131, 132) is formed integrally with the coupling-in region (15).

3. The lighting device (20) according to any one of the preceding claims, **characterised in that** the locking element (131) is a protruding lug on the coupling-in region (15), which lug forms a stop face (133) on a side facing away from a light coupling-in face (17) of the coupling-in region (15).

4. The lighting device (20) according to claim 3, **characterised in that** the first securing device (13) has a recess (231) through which the locking element (131) is movable during the insertion of the coupling-in region (15) and which is arranged by an angle in relation to the end position of the locking element (131).

5. The lighting device (20) according to any one of the preceding claims, **characterised in that** the coupling-in region (15) has two locking elements (131, 132), which are offset along the longitudinal axis (c) and which preferably are arranged in different angular positions.

6. The lighting device (20) according to claim 5, **characterised in that** each of the two locking elements (131, 132) has a stop face (133, 134), wherein the stop faces are oriented opposite one another and preferably face towards one another, and **in that** counter-faces (232, 233) cooperating with the stop faces of the locking elements are provided in the first securing location (23).

7. The lighting device (20) according to claim 6, **characterised in that** the counter-faces (232, 233) are formed as upper-side and lower-side faces of at least one strip (25) of the support frame (22).

8. The lighting device according to any one of claims 1 to 4, **characterised in that** the at least one locking element (131, 132) is formed as a locking element with stop faces (133, 134) arranged opposite one another, and **in that** two counter-faces (232, 233) are provided in the first securing location (23) and are each formed on a strip (25) of the support frame (22) and cooperate with the stop faces (133, 134) of the locking elements (131, 132).

9. The lighting device (20) according to any one of the preceding claims, **characterised in that** the coupling-in region (15) is formed as a substantially circular-cylindrical end of a light guide, at which the light is coupled in through the front face (17) of the circular-cylindrical end in the form of a light coupling-in face.

10. The lighting device (20) according to any one of the preceding claims, **characterised in that** the second securing arrangement (14) comprises at least one latching element (141), specifically a latching pawl or a latching stop, which cooperates in a latching manner with an assigned counter-element (241) of the second securing location (24), specifically a latching stop or a latching pawl.

11. A lighting device (20) according to claim 10, **characterised in that** the second securing arrangement (14) additionally comprises at least one centring arrangement (142), which cooperates with corresponding indentations and/or protrusions on the second securing location (24) for centring the head portion (12) in the support frame (22).

12. The lighting device (20) according to any one of the preceding claims, **characterised in that** the securing location (13) is impermeable to light and together with the coupling-in region (15) of the light guide assembly (10) inserted in said securing location forms a connection to the interior of the lighting device that is shielded against scattered light.

13. The lighting device (20) according to claim 1, **characterised in that**, starting from the state in which the coupling-in region (15) is inserted in the first securing location (23) while the head portion (12) is not yet fixed at the second securing location (24), the head portion (12) arrives at the second securing location (24) for being latched therein by means of a pivoting motion about the longitudinal axis (c) of the first securing location (23).

## Revendications

1. Dispositif d'éclairage (20) pour un véhicule, en particulier pour un véhicule automobile, comportant au moins une source de lumière et au moins un ensemble guide de lumière (10) associé à ladite au moins une source de lumière pour le guidage de la lumière qui est émise par ladite au moins une source de lumière et qui est couplée dans l'ensemble guide de lumière, l'ensemble guide de lumière (10) étant apte à être monté dans un cadre de support (22) du dispositif d'éclairage (20) et comportant
- une partie tête (12) ayant au moins un élément de découplage (18) pour le découplage d'au moins une partie de la lumière couplée, ainsi que
- une partie d'amenée (11), qui comporte une zone de couplage (15), qui est agencée pour le couplage d'une lumière provenant d'une source de lumière et au moyen de laquelle la lumière ainsi couplée est apte à être amenée à la partie tête (12),
dans lequel
la zone de couplage (15) présente un premier dispositif de fixation (13), qui comporte au moins un élément de verrouillage (131, 132) faisant saillie transversalement à un axe longitudinal (c) de la région de couplage (15), la région de couplage (15) étant apte à être introduite dans un premier emplacement de fixation (23) du cadre de support (22) et étant apte à y être verrouillée au moyen du premier agencement de fixation, et
la partie tête (12) présente un second dispositif de fixation (14) pour la fixation de la partie tête (12) sur un second emplacement de fixation (24) du cadre de support (22),
**caractérisé par le fait que** l'ensemble guide de lumière (10) est apte à pivoter autour de l'axe longitudinal (c) dans le premier emplacement de fixation (23) dans un état dans lequel la zone de couplage (15) est introduite dans le premier emplacement de fixation (23), mais la partie tête (12) n'est pas encore fixée au second emplacement de fixation (24).

2. Dispositif d'éclairage (20) selon la revendication 1, **caractérisé par le fait que** ledit au moins un élément de verrouillage (131, 132) est formé d'un seul tenant avec la zone de couplage (15).

3. Dispositif d'éclairage (20) selon l'une des revendications précédentes, **caractérisé par le fait que** l'élément de verrouillage (131) est un nez faisant saillie sur la zone de couplage (15), qui forme une surface d'arrêt (133) sur un côté tourné à l'opposé d'une surface de couplage de lumière (17) de la zone de couplage (15).

4. Dispositif d'éclairage (20) selon la revendication 3, **caractérisé par le fait que** le premier dispositif de fixation (13) présente un renfoncement (231), à travers lequel l'élément de verrouillage (131) est déplaçable pendant l'introduction de la zone de couplage (15) et lequel est disposé selon un angle par rapport à la position d'extrémité de l'élément de verrouillage (131).

5. Dispositif d'éclairage (20) selon l'une des revendications précédentes, **caractérisé par le fait que** la zone de couplage (15) présente deux éléments de verrouillage (131, 132) qui sont décalés le long de l'axe longitudinal (c) et qui sont disposés de préférence dans différentes positions angulaires.

6. Dispositif d'éclairage (20) selon la revendication 5, **caractérisé par le fait que** chacun des deux éléments de verrouillage (131, 132) présente une surface d'arrêt (133, 134), les surfaces d'arrêt étant orientées à l'opposé l'une de l'autre et, de préférence, étant tournées l'une vers l'autre, et **par le fait que** des contre-surfaces (232, 233) coopérant avec les surfaces d'arrêt des éléments de verrouillage sont disposées dans le premier emplacement de fixation (23).

7. Dispositif d'éclairage (20) selon la revendication 6, **caractérisé par le fait que** les contre-surfaces (232, 233) sont réalisées en tant que surfaces côté supérieur et côté inférieur d'au moins une bande (25) du cadre de support (22).

8. Dispositif d'éclairage selon l'une des revendications 1 à 4, **caractérisé par le fait que** ledit au moins un élément de verrouillage (131, 132) est réalisé en tant qu'élément de verrouillage avec des surfaces d'arrêt (133, 134) situées à l'opposé l'une de l'autre et **par le fait que** deux contre-surfaces (232, 233) sont disposées dans le premier emplacement de fixation (23), qui sont formées chacune sur une bande (25) du cadre de support (22) et coopèrent avec les surfaces d'arrêt (133, 134) des éléments de verrouillage (131, 132).

9. Dispositif d'éclairage (20) selon l'une des revendications précédentes, **caractérisé par le fait que** la zone de couplage (15) est réalisée en tant qu'extrémité sensiblement circulaire-cylindrique d'un guide de lumière, auquel la lumière est couplée par la face avant (17) de l'extrémité circulaire-cylindrique en tant que face de couplage de lumière.

10. Dispositif d'éclairage (20) selon l'une des revendications précédentes, **caractérisé par le fait que** le second dispositif de fixation (14) comporte au moins un élément d'encliquetage (141), à savoir un cliquet ou une butée de crantage, qui coopère par enclenchement avec un contre-élément associé (241) du second emplacement de fixation (24), à savoir une butée de crantage ou un cliquet.

11. Dispositif d'éclairage (20) selon la revendication 10, **caractérisé par le fait que** le second dispositif de fixation (14) comporte de façon supplémentaire au moins un dispositif de centrage (142), qui coopère avec des évidements et/ou des saillies correspondantes sur le second emplacement de fixation (24) pour le centrage de la partie tête (12) dans le cadre de support (22).

12. Dispositif d'éclairage (20) selon l'une des revendications précédentes, **caractérisé par le fait que** l'emplacement de fixation (13) est imperméable à la lumière et conjointement avec la zone de couplage (15) de l'ensemble guide de lumière (10) introduite dans celui-ci forme une connexion à l'intérieur du dispositif d'éclairage qui est protégée contre une lumière diffusée.

13. Dispositif d'éclairage (20) selon la revendication 1, **caractérisé par le fait qu'**à partir de l'état dans lequel la zone de couplage (15) est introduite dans le premier emplacement de fixation (23), mais la partie tête (12) n'est pas encore fixée sur le second emplacement de fixation (24), la partie tête (12) vient se placer dans le second emplacement de fixation (24) par un mouvement de pivotement autour de l'axe longitudinal (c) du premier emplacement de fixation (23) et y est encliquetable.
